# EUROPEAN PATENT SPECIFICATION

(11) **EP 2 611 276 B1**
(45) Date of publication and mention of the grant of the patent: **29.03.2017**
(21) Application number: 11764298.3
(22) Date of filing: 25.08.2011
(51) Int. Cl.: A01B 71/08, A01C 7/08

(54) **A PNEUMATIC PRECISION SOWING MACHINE COMPRISING A DEVICE AND A METHOD FOR REDUCING THE DISPERSION INTO THE ENVIRONMENT OF DUST FROM ABRASION OF DRESSED SEEDS**
PNEUMATISCHE PRÄZISIONSSÄMASCHINE MIT VORRICHTUNG UND VERFAHREN ZUR MINIMIERUNG DER UMWELTBELASTUNG DURCH STAUBDISPERSIONEN AUS DEM ABRIEB VON GEBEIZTEM SAATGUT
MACHINE D'ENSEMENCEMENT DE PRÉCISION PNEUMATIQUE AVEC DISPOSITIF ET PROCÉDÉ POUR RÉDUIRE LA DISPERSION, DANS L'ENVIRONNEMENT, DE POUSSIÈRES PROVENANT DE L'ABRASION DE SEMENCES TRAITÉES

(30) Priority: 02.09.2010 IT RM20100465
(43) Date of publication of application: 10.07.2013
(73) Proprietor: Consiglio per la Ricerca e la Sperimentazione In Agricoltura (C.R.A.), 00184 Roma (IT)
(72) Inventor: POCHI, Daniele, I-00016 Monterotondo (rm) (IT); FEDRIZZI, Marco, I-00016 Monterotondo (rm) (IT)
(74) Representative: Robba, Pierpaolo
(86) International application number: PCT/IB2011/053736
(87) International publication number: WO 2012/029003

(56) References cited:
- EP-A1- 2 496 064
- EP-A2- 0 506 210
- EP-A2- 2 427 042
- DE-A1-102008 037 782
- US-B1- 6 273 153

## Description

The present invention relates to a pneumatic precision sowing machine comprising a device for and a method of reducing the dispersion into the environment of dust from abrasion of dressed seeds by pneumatic precision sowing machines.

More in detail, the invention relates to an improved device and method of the above kind.

It is known that the use of dressed seed in the spring sowing of maize and other species is a widespread practice, since it allows an effective control action by the active principles used against terricolous insects and sap feeders in general. Insecticides most commonly used for seed dressing are: Gaucho 350 FS (based on imidacloprid); Regent (active principle: fipronil); Cruiser 350 FS (active principle: thiamtoxam), Poncho (active principle: clothianidin). Since some years a coincidence has been detected between the use of dressed maize seeds and cases of bee-hive mortality and depopulation complained about by beekeepers in areas with high diffusion of maize. It has been hypothesised that said noxious effect for bees is due to the dispersion into the environment of the above substances due to the dispersion into the environment, even in small amounts, of dust from abrasion of dressed seeds. The production of such an abrasion dust would be related in particular to the use of pneumatic precision sowing machines. In order to prevent further damages to the bee population, use of the above active principles for dressed seeds has been suspended.

In order to solve the problem of the dispersion into the environment of dust of dressed seeds, modifications to several models of pneumatic sowing machines have been proposed, with the aim to direct downwards, near ground and by means of flexible pipes, air outgoing from the pneumatic system (this being the major cause of the dispersion of the same dust). In this way, drift of dust and of the substances contained therein, which tend to remain in the sowing area, is reduced.

An example of these above mentioned solutions is disclosed in DE 10 2008 037 782 which discloses a pneumatic sowing machine comprising receiving units arranged by openings wherein the receiving units capture the air leaving from the openings.
US 6 273 153 B1 discloses a system for metering and dispensing particulate matter, such as agricultural pesticides and fertilizers, from a storage bin directly into an applicator bin and comprises a pneumatic transport conduit for suspending the released particulate matter in a flow of gas and transporting the suspended matter to an applicator bin.

Generally, a sowing machine is an agricultural machine used for planting seeds into a ground previously prepared in suitable manner. Such a machine is towed or carried by tractors and simultaneously cuts the sowing furrow, lays the seeds, closes the furrow and partially tamps earth around the seed.

Pneumatic precision sowing machines have the capability of controlling the individual seed, and hence they can obtain any distance in laying. The pneumatic equipment they are equipped with constantly generates a vacuum used for taking the individual seed by means of rotary metal surfaces (the distributors) provided with holes much smaller than the typical seed. The vacuum is applied on one side of the surface, in such a manner that a single seed per hole remains "adhering" (because of the vacuum) on the other side, independently of the actual shape and size of the seed itself. In such machines, the vacuum generating pneumatic equipment is driven by the tractor (by means of a rotary power take-off), whereas the mechanical movement of the distributors (whose speed determines the seed distance) is driven by wheels resting on the ground, so that the seed distance remains constant even if the advance speed changes.

According to a first modification proposed according to the prior art, a manifold is placed at the outlet from the vacuum generator of the pneumatic equipment of the sowing machine and the manifold sends air into four deflecting pipes directing such air downwards. In this manner, the original outlet of the vacuum generator is hermetically sealed. The pipes end behind the furrow-cutting devices of the sowing machine, thereby assisting in burying the dust containing the active principle. If the overall cross-section of the four pipes is lower than the original section of the air outlet from the vacuum generator, such kind of modification entails the problem that air comes out from the pipes at high speed and creates whirls tending to bring again dust upwards.

According to a second modification proposed according to the prior art, a manifold sends air coming out from the vacuum generator into two deflecting pipes with wide sections, directing air downwards. The pipes end at 10 - 15 cm from the ground surface. Thanks to the wide pipe section, and hence the low output speed of air, dust tends to deposit in the sowed areas, thereby eliminating the problem of the whirls inherent in the first solution. However, in presence of wind, dust tends anyway to drift into the surrounding areas.

EP 2 496 064 on which the preamble of claim 1 is based discloses the discharge of contaminated excess air via the seed supply line directly into the furrow thereby causing dispersion of contaminants into the environment.

It is also to be taken into account that the reduction in dispersion that can be attained thanks to the above modifications depends on the quality of the dressing treatment the seed has been subjected to. If quality is high, the amount of abrasion dust being produced is lower and the improvement attained by modifying the sowing machines is in percentage lower. According to the results of tests carried out with seeds obtained through a last- generation (high quality) dressing process, use of said modifications allows an average decrease of 50% in the concentration of active principle present on the surface of the ground surrounding the sowed area.

At present, no information is available that allows understanding whether such amounts are compatible with bee physiology. Hence it is convenient to follow any route allowing further reductions in dispersion.

The solution according to the invention lies within such context and aims at providing a solution to the problem of the dispersion of abrasion dust related to the use of pneumatic sowing machines, by finding modifications to be made to the sowing machines in order to abate the amount of abrasion dusts dispersed into the environment and/or the fraction of such dusts subjected to drift.

The above and other results are attained according to the present invention by proposing a device for and a method of reducing the dispersion into the environment of dust from abrasion of dressed seeds by pneumatic precision sowing machines.

Therefore, it is an object of the present invention to provide a device and a method that allow overcoming the problems of the prior art solutions and obtaining the technical results described above.

It is another object of the invention to provide a device that can be manufactured and method that can be performed with reduced costs, as far as both the manufacturing and performing costs and the management costs are concerned.

It is a further, but not the last object of the invention to provide a device and a method that are substantially simple, safe and reliable.

Therefore, a first specific subject matter of the invention is a pneumatic precision sowing machine comprising a device for reducing the dispersion into the environment of dust from abrasion of dressed seeds caused by the pneumatic precision sowing machine, which device comprises means for recirculating air discharged by the fan of the pneumatic system of the sowing machine.

According to the invention, said device further comprises means for discharging possible excess air present due to recirculation and means for filtering air discharged by said discharging means.

Still further, said means for recirculating air discharged by the fan of the pneumatic system of the sowing machine may comprise one or more recirculation conduits leading to respective hoppers, said means for discharging possible excess air present due to recirculation comprise an opening on said hoppers and said means for filtering discharged air comprise a filter. In the alternative, said means for recirculating air discharged by the fan of the pneumatic system of the sowing machine may comprise one or more recirculation conduits leading to a pressure compensation chamber, connected by means of conduits to each hopper, said means for discharging possible excess air present due to recirculation comprise an opening of said compensation chamber and said means for filtering discharged air comprise a filter.

In the alternative, said device for reducing the dispersion into the environment of dust from abrasion of dressed seeds by pneumatic precision sowing machines may further comprise means for delivering possible excess air present due to recirculation to the air inlet conduit of the engine of a tractor towing the sowing machine.

Moreover, a second specific subject matter of the invention is a method of reducing the dispersion into the environment of dust from abrasion of dressed seeds by pneumatic precision sowing machines through recirculation of air discharged by the fan of the pneumatic system of the sowing machine.

In the alternative, according to the invention, said method may comprise discharging possible excess air present due to recirculation and filtering the discharged air, or delivering possible excess air present due to recirculation to the air inlet of the engine of a tractor towing the sowing machine.

The effectiveness of the device according to the present invention, which enables a direct utilisation in conjunction with pneumatic precision sowing machines, is clearly apparent, in that the device is effective in reducing the effects of the dispersion into the environment of abrasion dust from the seed coating (dressing).

In particular, the proposed invention can be used according to two different production typologies:
- it can be applied to and integrated into the design of new kinds of sowing machines;
- it can be installed, as an accessory kit, on the sowing machines already in use, so as to make them still utilisable and compatible with the sowing of dressed reproductive material.

Consequently, the potential users of the present invention are primarily mechanical companies manufacturing sowing machines and, secondarily, other companies capable of producing after-market accessories to be applied on existing machines.

Taking into account the specificity of the technical, dimensional, constructive and operational characteristics of the different models of commercially available sowing machines and of machines already circulating, it is believed that the invention is mainly of interest for the first typology of manufacturing companies, also because the invention would permit them to go on with the production of the current sowing machines through the introduction of a modification which is neither particularly expensive nor particularly complex.

The present invention will be now described by way of non limiting example according to a preferred embodiment, with particular reference to the Figures of the accompanying drawings, in which:

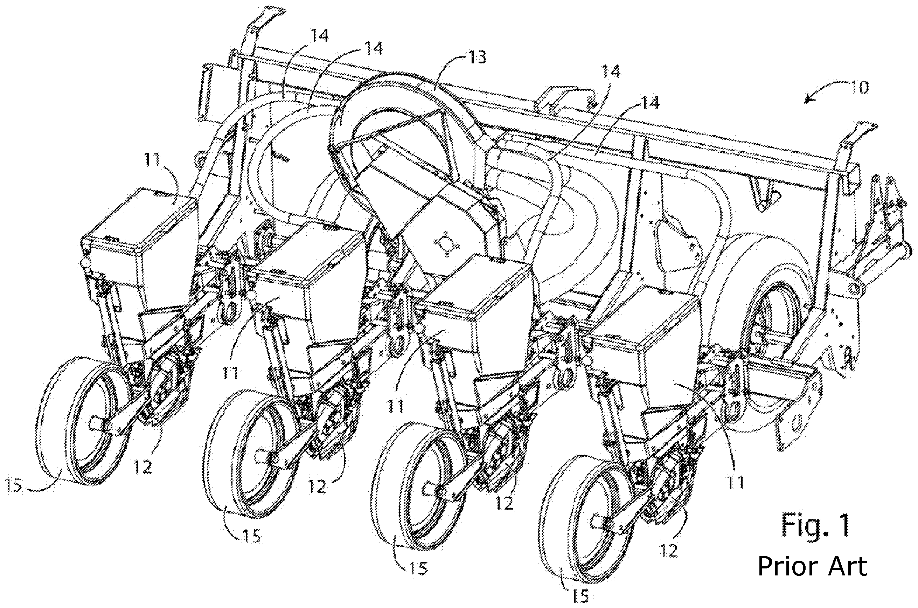

- Fig. 1 shows a perspective view of a pneumatic precision sowing machine according to the prior art;

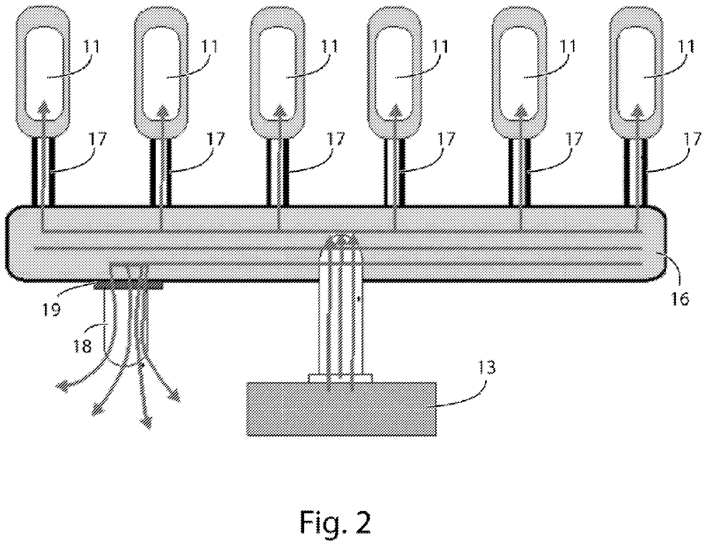

- Fig. 2 shows a diagram of a device for reducing the dispersion into the environment of dust from abrasion of dressed seeds according to the present invention;

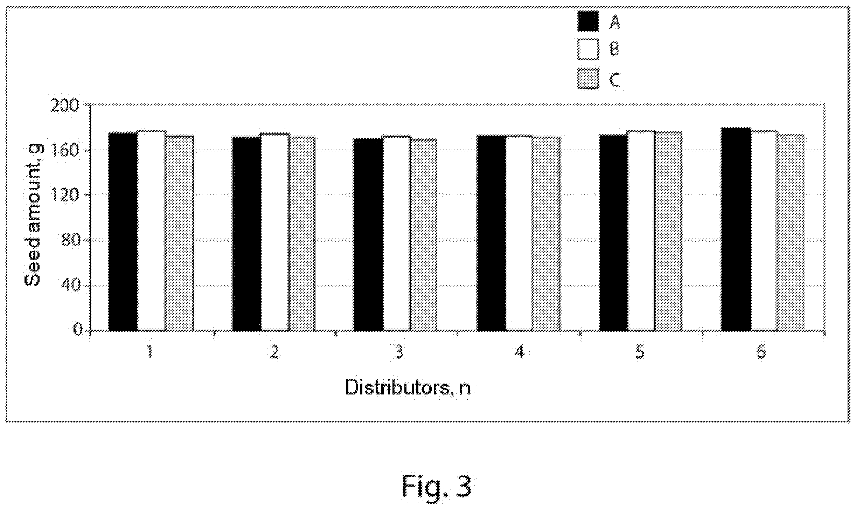

- Fig. 3 shows a comparative histogram representing the behaviour of the transversal seed distribution on a pneumatic precision sowing machine according to the prior art, a pneumatic precision sowing machine with deflecting pipes according to the partial solutions proposed according to the prior art and a pneumatic precision sowing machine equipped with a device according to the present invention, in the simplified embodiment thereof, respectively;

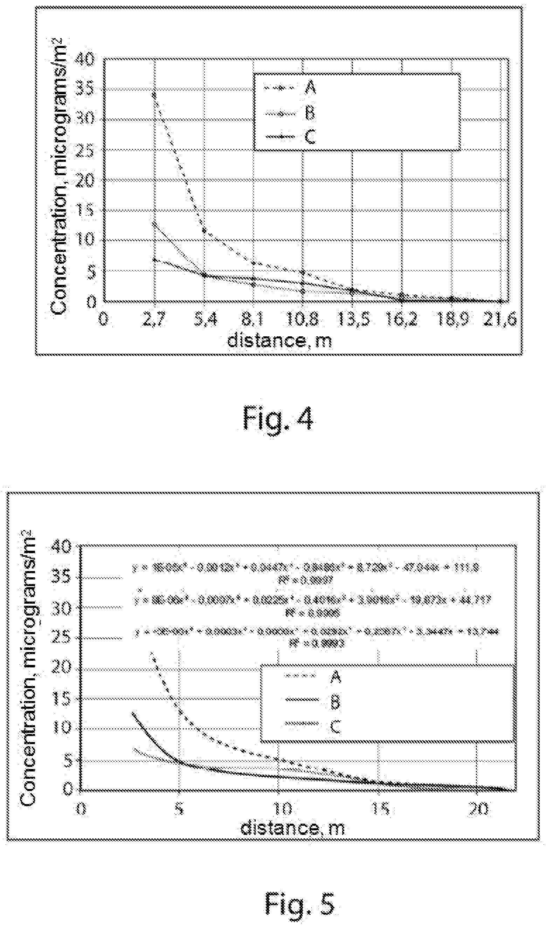

- Fig. 4 shows a comparative diagram representing the behaviour of the concentration of active principle clothianidin at the ground upon sowing with a pneumatic precision sowing machine according to the prior art, a pneumatic precision sowing machine with deflecting pipes according to the partial solutions proposed according to the prior art and a pneumatic precision sowing machine equipped with a device according to the present invention, in the simplified embodiment thereof, respectively;
- Fig. 5 shows a comparative diagram representing the regression curves obtained from experimental data, the corresponding functions and the values of R2 relevant to the comparative diagram shown in Fig. 4; and

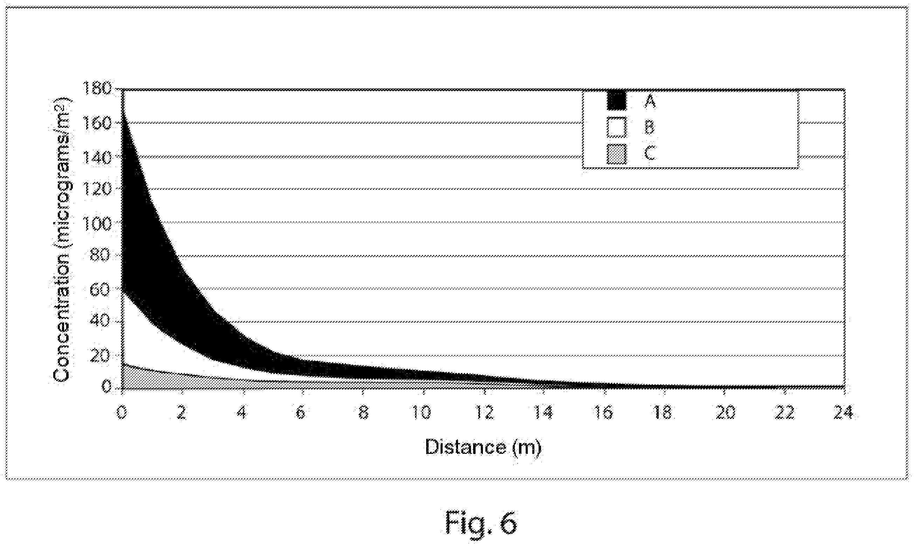

- Fig. 6 shows a comparative diagram with superimposed areas representing the behaviour of the concentration of active principle clothianidin at the ground upon sowing with a pneumatic precision sowing machine according to the prior art, a pneumatic precision sowing machine with deflecting pipes according to the partial solutions proposed according to the prior art and a pneumatic precision sowing machine equipped with a device according to the present invention, in the simplified embodiment thereof, respectively;

Referring to the Figures, Fig. 1 shows a sowing machine according to the prior art, generally denoted by reference numeral 10, and shows hoppers 11 and distributors 12 below, as well as vacuum generating fan 13 and conduits 14 connecting it with the respective hoppers 11. The Figure further shows wheels 15 driving the mechanical movement of distributors 12, and structure for connection to the tractor (not shown) towing sowing machine 10.

The pneumatic system operates through fan 13, which generates a negative pressure inside the whole seed distribution system. Air enters from any opening existing in the system and is discharged only through the outlet port of the fan.

Referring to Fig. 2, the device according to the present invention, with respect to the modifications described above, allows a further reduction in the dispersion of abrasion dust through a system for partly or wholly recirculating the discharged air, which system enables keeping dust within the sowing machine itself.

The function of the device proposed herein is to intercept the air flow outgoing from the pneumatic system and to direct it again into the sowing machine. In doing so, it is to be taken into account that recirculated air can interfere with the normal operation of the sowing machine, since it can alter the normal air flow, thereby negatively affecting the seed distribution quality. In order to avoid this drawback, air outgoing from vacuum generating fan 13 is first sent to a pressure compensation chamber 16. Through suitable conduits 17, air flows at constant speed from this chamber into each seed-containing hopper 17 and, through further conduits (not shown), it is sucked again by vacuum generating fan 13. Dust and the substances contained therein remain confined inside the machine. At the same time, a constant air flow, promoting the seed distribution uniformity, is ensured through each hopper 11.

Due to recirculation, excess air will be present in the system. It is therefore necessary to provide an opening letting excess air go out. To this end, an opening 18 is provided on compensation chamber 16 and, in order to prevent dispersion of dust contained in the chamber, such opening is equipped with a suitable filtering element 19, readily accessible for maintenance operations (cleaning and/or replacement).

Filtering elements 19 that can be used may be of different kinds, including the conventional air filters for engines and anti-pollen filters for automotive applications.

The flow of air pushed into hoppers 11 at constant speed and pressure thanks to compensation chamber 16 acts by pushing the seed towards distribution devices 12, which carry out ground distribution, by operating in the same direction as the vacuum generated by vacuum generating fan 13. Consequently, a reduction in the vacuum value with respect to the values indicated by the manufacturer for the correct operation of the sowing machine should be possible, without affecting the sowing uniformity, while reducing, consequent, even if slightly, the required power and the corresponding fuel consumption.

The proposed device, in its configuration disclosed with reference to Fig. 2, represents a structural modification of the pneumatic sowing machines. For that reason, it is more suitable for installation during the assembling of the machine by the manufacturer.

A simplified embodiment, suitable for application to the sowing machines in use, comprises a system promoting recirculation of air and dust contained therein, yet without requiring the compensation chamber. According to this simplified embodiment, a conduit is provided that brings again air into seed hopper 11 through an air-tight cover. The cover has an opening equipped with a filter allowing the excess air to be discharged, while retaining dust.

A prototype of the device for reducing the dispersion into the environment of dust from abrasion of dressed seeds by pneumatic precision sowing machines, in accordance to said simplified embodiment, has been constructed in order to evaluate its performance in comparison to the prior art solutions. In particular, in the constructed prototype, air is recirculated through only two out of the six hoppers the sowing machine is equipped with.

The results of the tests carried out in order to check the effects of such application on the seed distribution uniformity have not revealed significant differences between the sowing machines with and without the device according to the invention, as it can be seen in the diagram of Fig. 3, which shows a comparative histogram representing the behaviour of the transversal seed distribution on a pneumatic precision sowing machine according to the prior art (A), a pneumatic precision sowing machine with deflecting pipes according to the partial solutions proposed by the prior art (B) and a pneumatic precision sowing machine equipped with a device according to the present invention (C), in the simplified embodiment thereof, respectively.

The constructed prototype has also been subjected to preliminary tests under simulated sowing conditions, with stationary machine and distribution system electrically driven so as to correspond to a working speed of 6 km/h with controlled wind speed and direction, set to correspond to a speed of 2,5 m/s and a direction perpendicular to the sowing direction, in order to obtain a first evaluation of the reduction in the dust dispersion in comparison to a pneumatic precision sowing machine according to the prior art and a pneumatic precision sowing machine with deflecting pipes according to the partial solutions proposed by the prior art, respectively.

A conventional air filter for engines, of the kind in use in motor vehicles, has been used for filtering excess air outgoing from the prototype.

The behaviour of the concentrations detected at different distances from the sowing area in the three modalities being compared is plotted in the diagram shown in Fig. 4, which refers in particular to the behaviour of the ground concentration of active principle clothianidin upon sowing with a standard machine (A), a machine modified with deflecting pipes (prior art) (B) and the simplified prototype with recirculation (C).

Fig. 5 shows the regression curves obtained from the experimental data, the corresponding functions and the values of R², always close to 1.

The first results indicate that the use of the prototype further reduces the active principle concentration with respect to the use of the conventional deflecting pipes (prior art), especially in proximity of the sowing line. As the distance increases, no significant differences are detected, even at the lowest concentration values.

The three regression functions indicated in Fig. 5 have been integrated over the sampling distance (0 to 22 m) in order to compute the amount of active principle dispersed in the whole per each metre of advance of the sowing machine along a theoretical ground strip adjacent to the field being sowed and 22 m wide. The comparative diagram with superimposed areas representing the behaviour of the ground concentration of active principle clothianidin relative to the three conditions of use of the sowing machine has thus been obtained. By multiplying by 10,000 and dividing by 22 the values obtained (micrograms/metre), the total dispersed amount referred to a 1 hectare surface is obtained.

Based on what described above, the data reported in table 1 have been obtained, which show that the use of the prototype according to the present invention has caused a reduction in the dispersed dust amount by about 75% with respect to a standard sowing machine and by about 37% with respect to the use of a sowing machine equipped with deflecting pipes according to the prior art.

**TABLE 1**

| Test condition | Amount of active principle (mg/ha) | Reduction (%) | Notes |
|---|---|---|---|
| Standard sowing machine | 130.57 | - | - |
| Deflecting pipe sowing machine | 51.98 | 60.19 | Relative to standard sowing machine |
| Sowing machine with the invention prototype | 32.94 | 74.77 | Relative to standard sowing machine |
| Sowing machine with the invention prototype | 32.94 | 36.62 | Relative to deflecting pipe sowing machine |

The results obtained can be further improved, without however departing from the scope of the present invention, especially by finding out filtering techniques (e.g., use of anti-pollen filters, active carbon filters, electrostatic devices, nanofibres) having chemical-physical characteristics more suitable to further abate the release of the abrasion dusts and the toxic substances contained therein into the environment.

The present invention has been described by way of non limiting example in connection with preferred embodiments thereof, but it is to be understood that changes and/or modifications can be made by those skilled in the art without thereby departing from the scope of the invention as claimed in the following claims.

## Claims

1. Pneumatic precision sowing machine (10) comprising a device for reducing the dispersion into the environment of dusts from abrasion of dressed seeds caused by the pneumatic precision sowing machine, wherein the device comprises means for recirculating air discharged by the fan (13) of the sowing machine pneumatic system, **characterized in that** said device further comprises means for discharging possibly exceeding air due to recirculation and means for filtering air discharged by said discharging means.

2. Machine according to claim 1, **characterised in that** said means for recirculating the air discharged by the fan (13) of the sowing machine pneumatic system comprise one or more recirculation conduits to respective hoppers (11), said means for discharging possibly exceeding air due to recirculation comprise an opening on said hoppers (11) and said means for filtering discharged air comprise a filter.

3. Machine according to claim 2, **characterised in that** said means for recirculating air discharged by the fan of the sowing machine pneumatic system comprise one or more recirculation conduits to a pressure compensation chamber (16), connected by means of conduits (17) to each hopper (11), said means for discharging possibly exceeding air due to recirculation comprise an opening (18) of said compensation chamber (16) and said means for filtering discharged air comprise a filter (19).

4. Machine according to claim 1, **characterised in that** it further comprises means for delivering possibly exceeding air due to recirculation to the air inlet conduit of the engine of a drawing tractor of the sowing machine.

5. Method for reducing the dispersion into the environment of dusts from abrasion of dressed seeds caused by pneumatic precision sowing machines, through recirculating the air discharged by the fan (13) of the sowing machine pneumatic system, **characterized in that** said method further comprises the discharging of possibly exceeding air due to recirculation and the filtering of discharged air.

6. Method for reducing the dispersion into the environment of dusts from abrasion of dressed seeds caused by pneumatic precision sowing machines according to claim 5, **characterized in that** it comprises the delivering of possibly exceeding air due to recirculation to the air inlet of the engine of a drawing tractor of the sowing machine.

## Patentansprüche

1. Pneumatische Präzisionssämaschine mit einer Vorrichtung zum Reduzieren des Staubeintrags aus dem Abrieb von geschältem Saatgut in die Umgebung, der durch die pneumatische Präzisionssämaschine bewirkt wird, wobei die Vorrichtung Mittel zum Rückführen von Luft aufweist, die von dem Gebläse (13) des pneumatischen Systems der Sämaschine abgegeben wird, **dadurch gekennzeichnet, dass** die Vorrichtung zudem Mittel zum Abgeben von rückführbedingt eventuell überschüssiger Luft und Mitteln zum Filtern von Luft, die von den Abgabemitteln abgegeben werden, aufweist.

2. Maschine nach Anspruch 1, **dadurch gekennzeichnet, dass** die Mittel zum Rückführen der von dem Gebläse (13) des pneumatischen Systems der Sämaschine abgegebenen Luft einen oder mehrere Rückführkanäle zu den entsprechenden Magazinen (11) aufweisen, wobei die Mittel zum Abgeben von rückführbedingt eventuell überschüssiger Luft eine Öffnung an den Magazinen (11) enthalten und die Mittel zum Filtern abgegebener Luft einen Filter enthalten.

3. Maschine nach Anspruch 2, **dadurch gekennzeichnet, dass** die Mittel zum Rückführen der von dem Gebläse (13) des pneumatischen Systems der Sämaschine abgegebenen Luft einen oder mehrere Rückführkanäle zu einer Druckausgleichskammer (16) aufweisen, die mittels Kanälen (17) an jedes Magazin (11) angeschlossen ist, wobei die Mittel zum Abgeben von wegen rückführbedingt eventuell überschüssiger Luft eine Öffnung (18) der Ausgleichskammer (16) aufweisen und die Mittel zum Filtern abgegebener Luft einen Filter (19) enthalten.

4. Maschine nach Anspruch 1, **dadurch gekennzeichnet, dass** sie zusätzlich Mittel zum Abgeben von rückführbedingt eventuell überschüssiger Luft an den Lufteinlasskanal des Motors einer Zugmaschine der Sämaschine aufweist.

5. Verfahren zum Reduzieren des Staubeintrags aus Abrieb von geschältem Saatgut in die Umgebung, der durch pneumatische Präzisionssämaschinen verursacht wird, durch Rückführen von Luft, die von dem Gebläse (13) des pneumatischen Systems der Sämaschine abgegeben wird, **dadurch gekennzeichnet, dass** das Verfahren zusätzlich das Abgeben von rückführbedingt eventuell überschüssiger Luft und das Filtern der abgegebenen Luft enthält.

6. Verfahren zum Reduzieren des Staubeintrags durch Abrieb von geschältem Saatgut, der durch pneumatische Präzisionssämaschinen in die Umgebung verursacht wird, gemäß Anspruch 5, **dadurch gekennzeichnet, dass** es das Abgeben von rückführbedingt eventuell überschüssiger Luft an einen Lufteinlass des Motors einer Zugmaschine der Sämaschine beinhaltet.

## Revendications

1. Machine pneumatique d'ensemencement de précision (10) comprenant un dispositif pour réduire la dispersion dans l'environnement de poussières provenant de l'abrasion de semences traitées provoquées par la machine pneumatique d'ensemencement de précision, dans laquelle le dispositif comprend des moyens de recirculation d'air évacué par le ventilateur (13) du système pneumatique de machine d'ensemencement, **caractérisée en ce que** ledit dispositif comprend en outre des moyens d'évacuation d'air éventuellement excédentaire dû à la recirculation et des moyens de filtration d'air évacué par lesdits moyens d'évacuation.

2. Machine selon la revendication 1, **caractérisée en ce que** lesdits moyens de recirculation de l'air évacué par le ventilateur (13) du système pneumatique de machine d'ensemencement comprennent un ou plusieurs conduits de recirculation vers des trémies (11) respectives, lesdits moyens d'évacuation d'air éventuellement excédentaire dû à la recirculation comprennent une ouverture sur lesdites trémies (11) et lesdits moyens de filtration d'air évacué comprennent un filtre.

3. Machine selon la revendication 2, **caractérisée en ce que** lesdits moyens de recirculation d'air évacué par le ventilateur du système pneumatique de machine d'ensemencement comprennent un ou plusieurs conduits de recirculation vers une chambre de compensation de pression (16), raccordée au moyen de conduits (17) à chaque trémie (11), lesdits moyens d'évacuation d'air éventuellement excédentaire dû à la recirculation comprennent une ouverture (18) de ladite chambre de compensation (16) et lesdits moyens de filtration d'air évacué comprennent un filtre (19).

4. Machine selon la revendication 1, **caractérisée en ce qu'**elle comprend en outre des moyens de distribution d'air éventuellement excédentaire dû à la recirculation au conduit d'entrée d'air du moteur d'un tracteur de la machine d'ensemencement.

5. Procédé de réduction de la dispersion dans l'environnement de poussières provenant de l'abrasion de semences traitées provoquées par des machines pneumatiques d'ensemencement de précision, par la recirculation de l'air évacué par le ventilateur (13) du système pneumatique de machine d'ensemencement, **caractérisé en ce que** ledit procédé comprend en outre l'évacuation d'air éventuellement excédentaire dû à la recirculation et la filtration de l'air évacué.

6. Procédé de réduction de la dispersion dans l'environnement de poussières provenant de l'abrasion de semences traitées provoquées par des machines pneumatiques d'ensemencement de précision selon la revendication 5, **caractérisé en ce qu'**il comprend la distribution d'air éventuellement excédentaire dû à la recirculation à l'entrée d'air du moteur d'un tracteur de la machine d'ensemencement.
